# NOUVEAU FASCICULE DE BREVET EUROPEEN

(11) **EP 0 787 032 B2**
(45) Date de publication et mention de la décision concernant l'opposition: **02.11.2005**
(45) Mention de la délivrance du brevet: 22.12.1999
(21) Numéro de dépôt: 95935987.8
(22) Date de dépôt: 19.10.1995
(51) Int. Cl.: B01D 36/04, B01D 29/41, B01D 29/68, B04B 5/00, B04B 9/06

(54) **ENSEMBLE DE TRAITEMENT D'UN FLUIDE PAR FILTRATION ET CENTRIFUGATION**
VORRICHTUNG ZUM BEHANDLUNG VON FLÜSSIGKEIT MITTELS FILTRATION UND ZENTRIFUGATION
ASSEMBLY FOR PROCESSING A FLUID BY FILTRATION AND CENTRIFUGATION

(30) Priorité: 19.10.1994 FR 9412461
(43) Date de publication de la demande: 06.08.1997
(73) Titulaire: Alfa Laval Moatti snc, 78340 Les-Clayes-sous-Bois (FR)
(72) Inventeur: CHRISTOPHE, Théophile, F-78330 Fontenay-le-Fleury (FR); MOATTI, Jean-Claude, F-92150 Suresnes (FR)
(74) Mandataire: Barbin le Bourhis, Joel
(86) Numéro de dépôt international: PCT/FR1995/001382
(87) Numéro de publication internationale: WO 1996/012549

(56) Documents cités:
- EP-A- 0 108 665
- EP-A- 0 136 202
- DE-C- 3 115 716
- DE-C- 4 306 431
- GB-A- 2 160 796
- US-A- 3 944 488

## Description

Le document DE-C-4 306 431 concerne un ensemble comprenant la combinaison, dans un carter unique, d'un filtre avec un dispositif de centrifugation.

Cependant, le filtre et le dispositif de centrifugation traitent chacun une partie du liquide à purifier.

Par ailleurs, le document DE 3 115 716 décrit un filtre avec nettoyage périodique des éléments filtrants à contre-courant et la possibilité de brancher une centrifugeuse à jet libre sur le conduit d'évacuation de ce filtre.

Cependant, selon ce document, la centrifugeuse ne peut qu'être à l'extérieur du boîtier renfermant le filtre, ce qui réduit la fiabilité de fonctionnement de la centrifugeuse et ne permet pas d'obtenir un ensemble aussi compact qu'il est souhaitable.

L'invention permet de résoudre ce problème en proposant un ensemble de traitement selon la revendication 1.

Les avantageuses dispositions suivantes sont en outre de préférence adoptées:
- une extrémité de l'un des conduits d'évacuation est emmanchée dans une extrémité de l'autre des deuxdits conduits, cependant que l'autre extrémité du conduit d'admission est rendue solidaire dudit carter unique;
- ladite autre extrémité du conduit d'admission est fixée audit carter par un boulon, qui, en outre, réalise l'obturation de cette autre extrémité;
- l'enceinte de centrifugation communique avec l'intérieur du carter par au moins une buse de sortie de fluide centrifugé, qui est orientée sensiblement perpendiculairement à un rayon passant par l'axe de rotation de ladite enceinte de centrifugation, de manière que cette enceinte de centrifugation soit entraînée en rotation par l'intermédiaire de la réaction du fluide sortant de la ou desdites buses de sortie par rapport au fluide contenu dans le carter;
- ledit conduit d'évacuation est ménagé dans le distributeur rotatif;
- des chambres de réception du fluide filtré par les éléments filtrants du filtre et du fluide traité par le dispositif de traitement par centrifugation sont ménagées dans ledit carter unique, en étant séparées l'une de l'autre par une cloison étanche de séparation.

L'invention possède les avantages principaux de compacité de l'ensemble de traitement, de fiabilité de cet ensemble, et de coût de fabrication réduit par rapport aux réalisations antérieures.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels:

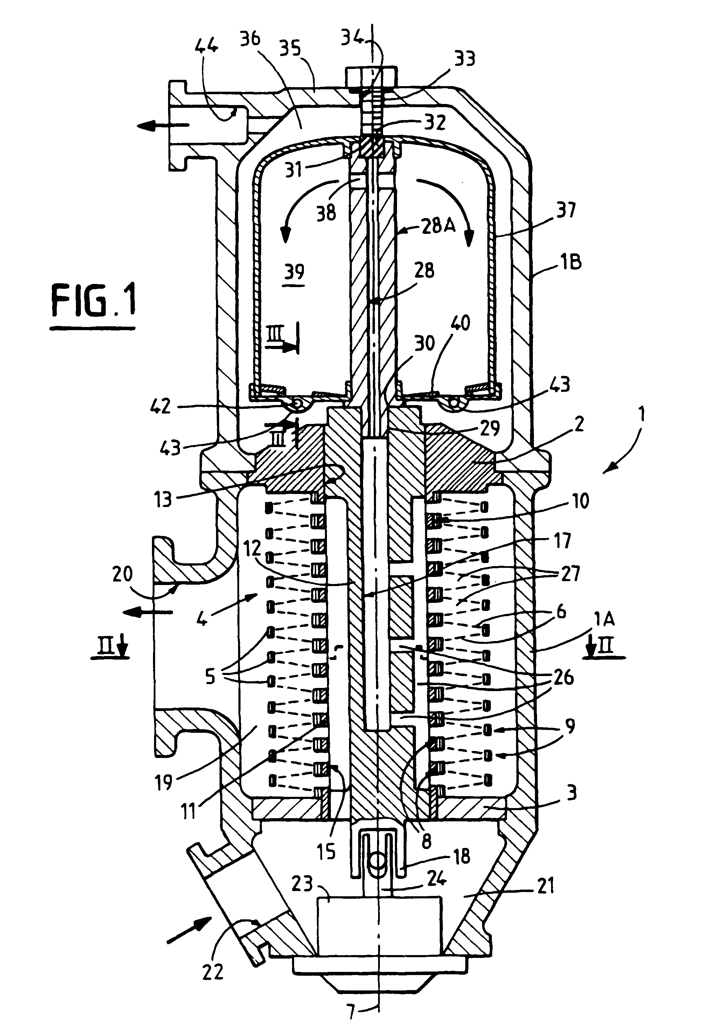

- la figure 1 est une coupe axiale d'un ensemble de traitement conforme à l'invention;
- la figure 2 est une coupe suivant II-II de la figure 1; et,
- la figure 3 est une coupe suivant III-III de la figure 1.

L'ensemble de traitement d'un fluide représenté sur les figures comprend un filtre et un dispositif de traitement par centrifugation, le tout contenu dans un carter unique 1 en deux parties 1 A, 1 B, assemblées par des boulons.

Le filtre, contenu dans la partie 1A du carter, comprend:
- deux cloisons transversales d'extrémité 2, 3 entre lesquelles est disposé un empilage 4 d'éléments filtrants 5 conformé, chacun en un disque de filtration 9, à deux tamis 6;
- un axe central 7;
- des alésages alignés 8, de même diamètre, coaxiaux à l'axe 7, appartenant chacun à l'un des disques de filtration 9, en contact étanche avec la face externe cylindrique 10 d'une chemise 11, elle-même comportant un alésage 15 coaxial à l'axe 7;
- un distributeur central de fluide 12, monté rotatif autour de l'axe 7, en contact étanche avec un alésage 13, dont est muni la cloison intermédiaire 2, elle-même assemblée avec étanchéité aux parties 1A et 1B du carter;
- un secteur évidé 14, que comporte le distributeur de fluide 12, dont la périphérie 16 est en appui étanche sur l'alésage 15 de la chemise 11, et qui communique avec un conduit d'évacuation 17 ménagé dans le distributeur de fluide 12, coaxial à l'axe 7;
- une fourche d'entraînement 18, située à l'extrémité axiale du distributeur de fluide 12 opposée à la cloison intermédiaire 2;
- une chambre de réception du fluide filtré 19, ménagée à l'intérieur de la partie 1A du carter, et contenant l'empilage 4 des éléments filtrants 5, munie d'un raccord 20 d'évacuation du fluide filtré;
- une chambre 21 d'admission d'un fluide pollué, destiné à être filtré, cette chambre étant munie d'un raccord d'admission 22 dudit fluide destiné à être filtré;
- un moteur 23, en l'espèce hydraulique, d'entraînement en rotation du distributeur de fluide 12, fixé sur la partie 1A du carter, muni d'un organe d'entraînement 24 associé à la fourche 18 pour la réalisation de l'entraînement en rotation du distributeur de fluide 12.

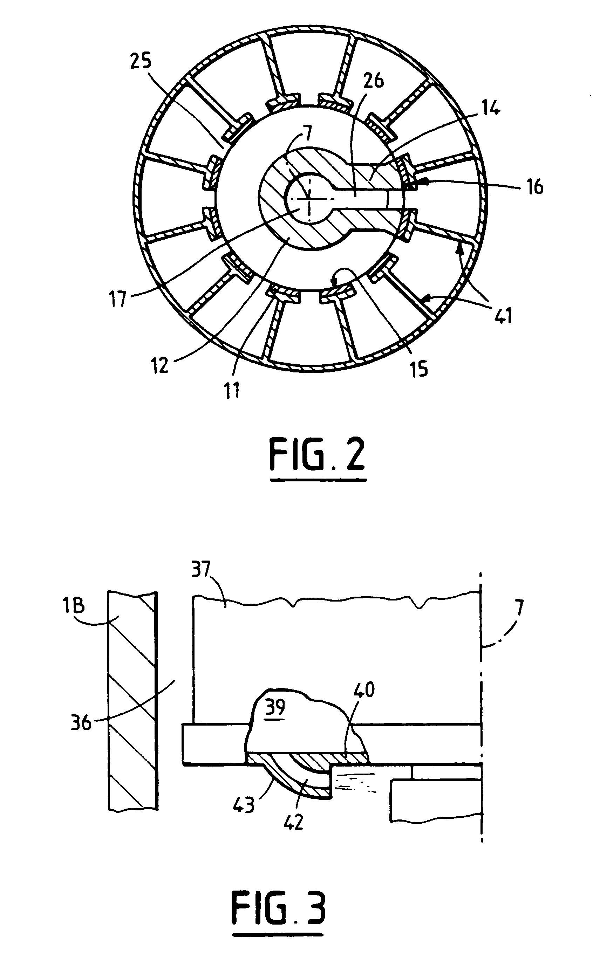

Chaque élément filtrant 5 comporte une pluralité, douze dans la réalisation de la figure 2, de secteurs angulaires 41 qui, par des orifices 25 ménagés dans la chemise 11 et dans les alésages 8, sont susceptibles successivement de réaliser la communication de l'espace intérieur 27 délimité par les parties des deux tamis 6 du secteur considéré, avec un conduit 26, qui est ménagé dans le secteur 14 du distributeur de fluide 12 et qui débouche dans le conduit d'évacuation 17, lequel est borgne à l'extrémité du distributeur de fluide 12 opposée à la cloison 2.

Le dispositif de traitement par centrifugation est contenu dans la partie 1 B du carter et comprend:
- un conduit central 28 d'admission du fluide à centrifuger, dont une extrémité 29 est constituée par un embout emmanché dans l'extrémité ouverte (non borgne) 30 du conduit d'évacuation 17, et dont l'autre extrémité 31 est constituée par un taraudage de fixation d'un boulon d'obturation 32; le bouchon 32 constitue lui-même l'extrémité d'un bouchon 33 vissé 34 dans une plaque transversale d'extrémité 35 délimitant, dans la panie 1B du carter, une chambre 36 de réception du fluide centrifugé, qui est séparée avec étanchéité de la chambre 19 de réception du fluide filtré par la cloison intermédiaire 2;
- une enceinte de centrifugation 37 est montée à rotation, par des bagues formant paliers lisses, autour de l'axe 7, qui est également l'axe du conduit d'admission 28 et de sa face externe 28A, ledit conduit formant donc également arbre de rotation pour l'enceinte de centrifugation 37;
- des orifices 38 réalisant la communication du conduit d'admission 28 avec l'intérieur 39 de l'enceinte 37.

Un fond transversal 40, perpendiculaire à l'axe 7, délimite la partie de l'enceinte de centrifugation 37 disposée en regard de la cloison transversale 2. Ladite enceinte de centrifugation 37 est complètement isolée de la chambre 36 de réception du fluide centrifugé excepté la communication réalisée par deux buses de sortie 43, sensiblement diamétralement opposées, dont les orifices de sortie 42 sont orientés sensiblement perpendiculairement à un diamètre passant par l'axe 7, et dans des sens opposés.

Le fonctionnement de l'ensemble de traitement va être exposé ci-après.

Le fluide à traiter, admis dans la chambre d'admission 21, emplit les espaces intérieurs 27 de tous les secteurs des divers éléments filtrants 5, sauf l'espace intérieur du secteur 41 de chaque élément filtrant qui est momentanément isolé des autres secteurs 41 par le secteur évidé 14 qui, lui, communique avec le conduit 26.

Ce fluide à filtrer, contenu dans lesdits espaces 27, traverse les tamis 6 desdits secteurs, y déposant sur leurs faces intérieures les impuretés qu'il contient, et étant reçu, débarrassé de ses impuretés, dans la chambre de réception 19 du fluide filtré, prêt à être réutilisé.

Par contre, en ce qui concerne les secteurs 41 des divers éléments filtrants, qui ne communiquent qu'avec le conduit 17, la pression du fluide déjà filtré contenu dans la chambre 19 a pour effet de faire traverser les parties correspondantes des tamis de filtration 6 par une partie dudit fluide, ce qui permet de décoller périodiquement les impuretés qui se sont déposées sur les faces internes des tamis et de les entraîner dans le conduit d'évacuation 17. Le moteur 23 a pour fonction d'entraîner pas à pas, secteur 41 après secteur 41, le distributeur 12 en rotation de manière à assurer la mise en communication périodique de chaque secteur angulaire 41 des divers éléments filtrants avec le conduit d'évacuation 17.

Ce fluide chargé d'impuretés est véhiculé directement par les conduits d'évacuation 17 et d'admission 28 vers l'enceinte 37, est reçu à l'intérieur 39 de l'enceinte de centrifugation, et, par centrifugation, est débarrassé de ses impuretés. Le fluide épuré est alors évacué hors de l'enceinte 37 en traversant les buses 43 et étant reçu dans la chambre 36 d'où il s'échappe vers un organe d'utilisation, par l'intermédiaire d'un raccord de sortie 44 dont est munie la partie 1 B du carter.

Il doit être observé que l'entraînement en rotation de l'enceinte de centrifugation 37 est réalisé par l'effet de réaction, par rapport au fluide contenu dans l'enceinte 37, du fluide qui s'échappe de l'intérieur 39 de l'enceinte 37 à travers les conduits 42 des buses 43. Cet effet de réaction est suffisant pour entrainer la rotation de l'enceinte de centrifugation à une vitesse de rotation - de l'ordre de 6000 tours/minute - à laquelle se produit effectivement la centrifugation. Pour mémoire, la vitesse de rotation réalisée par le moteur 23 est de l'ordre de 2 à 3 tours/minute.

L'avantage de la réalisation décrite réside dans la compacité et la légèreté de l'ensemble; dans la suppression des fuites éventuelles des raccordements externes entre filtre et centrifugeur, du fait de la suppression desdits raccordements externes; dans la suppression des risques de ruptures des conduits externes, qui ont été supprimés; et, finalement, dans la réduction obtenue du coût de fabrication de l'ensemble.

II est entendu que l'invention n'est pas limitée à la réalisation de filtres comprenant des disques ou des galettes d'éléments filtrants, mais couvre également le cas de tous autres filtres, tels que, par exemple, ceux ayant des tamis cylindriques. Le moteur 23, avantageusement du type hydraulique, peut aussi, en variante, être d'un autre type - électrique par exemple. Enfin, il faut prévoir au moins une buse 43, de préférence un nombre pair de buses diamétralement opposées.

Une application est le traitement des huiles de lubrification des moteurs type "diesel", ou encore l'épuration de certains combustibles utilisés par lesdits moteurs.

## Revendications

1. Ensemble de traitement d'un fluide comprenant d'une part un filtre (4) constitué d'au moins un élément filtrant (5) et d'autre part un dispositif de centrifugation comprenant une enceinte rotative (37) pourvue d'un conduit d'admission (28) et d'au moins une buse (43) de sortie de fluide centrifugé qui est orientée sensiblement perpendiculairement à un rayon passant par l'axe de rotation (7) de ladite enceinte (37) de manière que cette enceinte soit entraînée en rotation par l'intermédiaire de la réaction du fluide sortant de ladite buse de sortie (43), ledit filtre (4) comportant un dispositif de nettoyage de chaque élément filtrant (5) incluant un distributeur rotatif (12-14) entraîné en rotation autour d'un axe par un moteur (23) et destiné à isoler périodiquement une partie de la surface filtrante afin d'en permettre le nettoyage par du fluide propre traversant chaque élément filtrant (5) à contre-courant, et alimentant ensuite, pour son épuration le dispositif de centrifugation via un conduit d'évacuation (17), **caractérisé en ce que** ledit filtre (4) et ledit dispositif de centrifugation sont logés dans un carter unique dans lequel sont ménagées une chambre de réception du fluide filtré (19) par lesdits éléments filtrants du filtre et une chambre de réception du fluide traité (36) par le dispositif de centrifugation, lesdites chambres étant séparées l'une de l'autre par une cloison étanche de séparation (2), lesdites chambres renfermant respectivement ledit filtre et ledit dispositif de centrifugation, **en ce que** ladite cloison est munie d'un alésage (13) avec lequel ledit distributeur est en contact étanche, **en ce que** ledit dispositif de centrifugation comporte un conduit d'admission (28) du fluide à centrifuger dont une extrémité est emmanchée dans l'extrémité ouverte du conduit d'évacuation (17) dudit distributeur, ledit conduit d'évacuation débouchant directement dans ledit conduit d'admission (28), et **en ce que** ce conduit d'admission forme un arbre de rotation pour ladite enceinte de centrifugation, des orifices (38) réalisant la communication entre ledit conduit d'admission (28) et l'intérieur de l'enceinte de centrifugation (37).

2. Ensemble de traitement selon la revendication 1, **caractérisé en ce que** l'autre extrémité (31) du conduit d'admission (28) est rendue solidaire (33-34) dudit carter unique (1A-1B).

3. Ensemble de traitement selon la revendication 2, **caractérisé en ce que** ladite autre extrémité (31) du conduit d'admission (28) est fixée au carter par un boulon (33), qui, en outre, réalise l'obturation (32) de cette autre extrémité.

## Patentansprüche

1. Vorrichtung zur Behandlung einer Flüssigkeit, die einerseits mit einem Filter (4), bestehend aus mindestens einem Filterelement (5), und andererseits mit einer Zentrifugeneinrichtung versehen ist, die eine drehbare Umhüllung (37) mit einer Zuführungsleitung (28) und mindestens einer für die zentrifugierte Flüssigkeit vorgesehenen Austrittsdüse (43), die genau senkrecht zu einer durch die Rotationsachse (7) der Umhüllung (37) verlaufenden Graden gerichtet ist, und zwar dergestalt, dass die Umhüllung durch die Reaktion der aus der Austrittsdüse (43) austretenden Flüssigkeit in Rotation versetzt wird, wobei der Filter (4) zu jedem Filterelement (5) eine Reinigungseinrichtung aufweist, die mit einem drehbaren Verteiler (12-14) versehen ist, der durch einen Motor (23) um eine Rotationsachse gedreht wird und dazu bestimmt ist, einen Teil der Filterfläche periodisch zu isolieren, um **dadurch** die Reinigung durch die saubere Flüssigkeit zu ermöglichen, die im Gegenstrom durch jedes Filterelement (5) strömt und dann zu dessen Reinigung die Zentrifugeneinrichtung über eine Auslassleitung (17) speist, **dadurch gekennzeichnet, dass** der Filter (4) und die Zentrifugeneinrichtung in einem einzigen Gehäuse angeordnet sind, in welchem eine Kammer (19) zur Aufnahme der durch die Filterelemente des Filters gefilterten Flüssigkeit und eine Kammer zur Aufnahme der durch die Zentrifugeneinrichtung behandelten Flüssigkeit (36) untergebracht sind, wobei die Kammern jeweils durch eine flüssigkeitsdichte Trennwand (2) gegeneinander getrennt sind und sowohl den Filter als auch die Zentrifugeneinrichtung enthalten, dass die Trennwand eine Bohrung (13) aufweist, mit der der Verteiler in dichtem Kontakt steht, dass die Zentrifugeneinrichtung eine Zuführungsleitung (28) für die zu zentrifugierende Flüssigkeit aufweist, von der ein Ende in das offene Ende der Auslassleitung (17) des Verteilers eingesteckt ist, wobei die Auslassleitung direkt in die Zuführungsleitung (28) mündet, und dass die Zuführungsleitung eine Drehachse für die Zentrifugenumhüllung bildet, wobei Öffnungen (38) die Verbindung zwischen der Zuführungsleitung (28) und dem Innenraum der Zentrifugenumhüllung (37) herstellen.

2. Behandlungsvorrichtung nach Anspruch 1, **dadurch gekennzeichnet, dass** das andere Ende (31) der Zuführungsleitung (28) fest (33-34) mit dem einzigen Gehäuse (1A-1B) verbunden ist.

3. Behandlungsvorrichtung nach Anspruch 2, **dadurch gekennzeichnet, dass** das genannte andere Ende (31) der Zuführungsleitung (28) mittels eines Bolzens (33) befestigt ist, der außerdem die Dichtung (32) dieses anderen Endes realisiert.

## Claims

1. Treatment assembly for treating a fluid comprising on the one hand a filter (4) that is constituted by at least one filtering element (5), and on the other hand a centrifuging device which comprises a rotary enclosure (37) provided with an admission conduit (28) and with at least one outlet nozzle (43) for the centrifugated fluid, which nozzle is oriented so as to be substantially perpendicular to a radius passing through the axis of rotation (7) of said enclosure (37), in such a way that said enclosure is driven in rotation by the reaction of the fluid coming out of said outlet nozzle (43), said filter (4) comprising a cleaning device for cleaning each filtering element (5) including a rotary distributor (12-14) driven in rotation about an axis by a motor (23) for periodically isolating one part of the filtering surface in order to allow the cleaning thereof with the clean fluid passing through each counter current filtering element (5) and then supplying, in view of the cleaning thereof, the centrifuging device through an evacuation conduit (17), the assembly being **characterised in that** said filter (4) and said centrifuging device are housed in a single casing provided with a chamber (19) for receiving the fluid filtered by said filtering elements of the filter and a chamber (36) for receiving the fluid treated by the centrifuging device, said chambers being separated one from the other by a tight partition wall (2), said chambers containing respectively said filter and said centrifuging device, **in that** said partition wall is provided with a bore (13) with which said distributor is in tight contact, **in that** said centrifuging device includes an admission conduit (28) of the fluid to be centrifuged one end of which is fitted in the open end of the evacuation conduit (17) of said distributor, said evacuation conduit flowing directly into said admission conduit (28), and **in that** said admission conduit forms a rotary shaft for said centrifuging enclosure, with orifices (38) creating a communication between said admission conduit (28) and the inside of the centrifuging enclosure (37).

2. Treatment assembly according to claim 1, **characterised in that** the other end (31) of the admission conduit (28) is secured (33-34) to said single casing (1A-1B).

3. Treatment assembly according to claim 2, **characterised in that** said other end (31) of the admission conduit (28) is fixed to the casing by a bolt (33) which, further, obturates (32) said other end.
